# EUROPÄISCHE PATENTSCHRIFT

(11) **EP 1 236 373 B1**
(45) Veröffentlichungstag und Bekanntmachung des Hinweises auf die Patenterteilung: **06.06.2012**
(21) Anmeldenummer: 00993363.1
(22) Anmeldetag: 05.12.2000
(51) Int. Cl.: H04Q 11/04

(54) **VERFAHREN UND VERMITTLUNGSEINRICHTUNG ZUM VERMITTELN VON VERBINDUNGEN VERRINGERTER BANDBREITE**
METHOD AND DEVICE FOR SWITCHING REDUCED BANDWIDTH CONNECTIONS
PROCEDE ET DISPOSITIF POUR COMMUTER DES LIAISONS A LARGEUR DE BANDE REDUITE

(30) Priorität: 10.12.1999 DE 19959718
(43) Veröffentlichungstag der Anmeldung: 04.09.2002
(73) Patentinhaber: Nokia Siemens Networks GmbH & Co. KG, 81541 München (DE)
(72) Erfinder: LÖBIG, Norbert, 64291 Darmstadt (DE)
(86) Internationale Anmeldenummer: PCT/EP2000/012236
(87) Internationale Veröffentlichungsnummer: WO 2001/043488

(56) Entgegenhaltungen:
- EP-A- 0 939 575
- DE-A- 19 507 269
- DE-A- 19 822 796
- US-A- 5 784 369

## Beschreibung

Die Erfindung betrifft ein Verfahren zum Vermitteln von Verbindungen verringerter Bandbreite, bei dem in einem Basiskanal einer Vermittlungsbandbreite zu einer Vermittlungseinrichtung die Nutzdaten mindestens zweier Nutzkanäle übertragen werden. Die Vermittlungseinrichtung ist beispielsweise eine Ortsvermittlungsstelle des öffentlichen Telekommunikationsnetzes.

Die Basiskanäle sind beispielsweise Kanäle eines PCM30-Systems (Pulse Code Modulation) mit einer Bandbreite von 64 kbit/s. Es werden aber auch andere Übertragungsverfahren mit anderen Übertragungsbandbreiten verwendet, z.B. das Verfahren SDH (Synchronous Digital Hierarchy). Die Daten verschiedener Basiskanäle werden über eine Übertragungsstrecke übertragen. Innerhalb zeitlich aufeinanderfolgender Zeitrahmen ist für jeden Basiskanal ein Zeitabschnitt festgelegt. Die übertragungsstrecke ist beispielsweise eine Leitung oder eine Funkstrecke. Üblicherweise stimmt die Bandbreite der Basiskanäle mit einer Vermittlungsbandbreite überein, d.h. mit der Bandbreite von Kanälen, die in einer Koppeleinrichtung gekoppelt werden. Somit beträgt die Vermittlungsbandbreite ebenfalls 64 kbit/s.

In einem Nutzkanal werden Nutzdaten zwischen zwei Teilnehmern übertragen. Meist ist die Übertragungsbandbreite eines Nutzkanals gleich der Übertragungsbandbreite des Basiskanals. Übertragen werden digitalisierte Sprachdaten, Faxdaten, Programmdaten, Dateidaten usw.

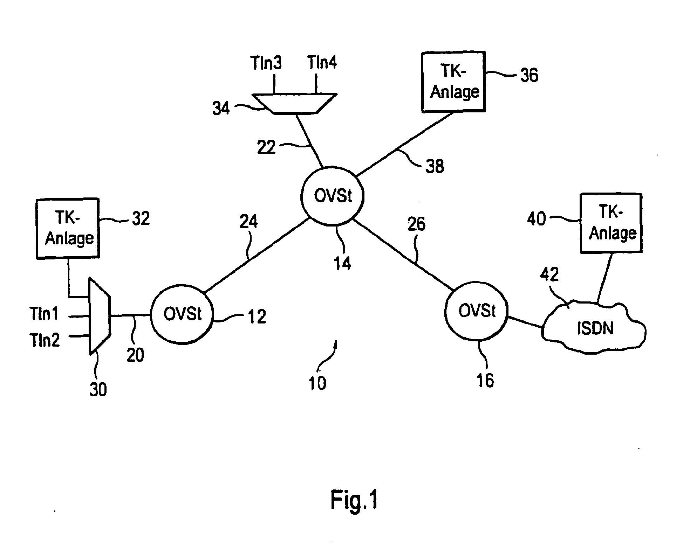

Durch die Öffnung des Telekommunikationsmarktes gibt es Netzbetreiber, die keine eigenen Übertragungsstrecken haben und nur wenige Vermittlungseinrichtungen besitzen. Figur 1 zeigt ein Telekommunikationsnetz 10, dessen Betreiber den größten Teil der Übertragungstechnik von einem anderen Netzbetreiber gemietet hat, z.B. einem herkömmlichen Netzbetreiber. Der Betreiber des Telekommunikationsnetz 10 wird nachfolgend als neuer Betreiber bezeichne. Das Telekommunikationsnetz 10 enthält drei Ortsvermittlungsstellen 12 bis 16, die vom neuen Betreiber genutzt werden. Der Netzbetreiber des Telekommunikationsnetzes 10 hat von dem anderen Netzbetreiber die Übertragungsstrecken 20 bis 26 gemietet. Die Übertragungsstrecke 20 verbindet die Ortsvermittlungsstelle 12 mit einem Teilnehmeranschlußkonzentrator 30, an welchem eine Vielzahl Teilnehmer angeschlossen sind, von denen Figur 1 zwei Teilnehmer Tln1 und Tln2 zeigt. Am Konzentrator 30 ist außerdem eine Telekommunikationsanlage 32 angeschlossen, die einer Privatfirma zur kostenfreien Vermittlung von Verbindungen innerhalb des Firmengeländes dient. Die Übertragungsstrecke 20 ist beispielsweise ein PCM30-System.

Die Übertragungsstrecke 22 verbindet die Ortsvermittlungsstelle 14 mit einem Teilnehmeranschluß-Konzentrator 34, an den ebenfalls eine Vielzahl von Teilnehmern angeschlossen sind, von denen in Figur 1 Teilnehmer Tln3 und Tln4 dargestellt sind. Eine Telekommunikationsanlage 36 ist über eine Übertragungsstrecke 38 direkt an die Ortsvermittlungsstelle 14 angeschlossen.

Die Übertragungsstrecke 24 verbindet die Ortsvermittlungsstellen 12 und 14. Die Ortsvermittlungsstellen 14 und 16 werden mit Hilfe der Übertragungsstrecke 26 verbunden. Eine Telekommunikationsanlage 40 ist über das öffentliche Telekommunikationsnetz 42 an die Ortsvermittlungsstelle 16 angeschlossen. Im öffentlichen Telekommunikationsnetz 42 werden Sprachdaten digital mit einer Bandbreite von 64 kbit/s übertragen. Der Netzbetreiber des Telekommunikationsnetzes 10 ist bestrebt, die gemieteten Übertragungsstrecken 20 bis 26 so gut wie möglich auszunutzen. Zwar können Maßnahmen zur Verringerung der Bandbreite der Nutzkanäle abschnittsweise auf den Übertragungsstrecken 20 bis 26 ergriffen werden, jedoch ist es wünschenswert Ortsvermittlungsstellen 12 bis 16 einzusetzen, die auch Nutzkanäle vermitteln können, die eine Ubertragungsbandbreite haben, die kleiner ist als die Bandbreite eines Basiskanals, d. h. kleiner als 64 kbit/s.

Kompressionsalgorithmen für Sprache sind in den Standards der ITU-T (International Telecommunication Union - Telecommunication) festgelegt, z. B. in den Standards G. 723 bis G. 729. Gemäß dieser Standards läßt sich die im Rahmen einer normalen Sprachverbindung zu übermittelnde Sprachinformation ohne störenden Sprachqualitätsverlust auf Bitraten von bis zu acht kbit/s verringern. Dies erlaubt es, einen Basiskanal zur Übertragung von bis zu acht Sprachverbindungen zu verwenden. Werden über die Verbindung Faxsimilidaten, Programmdaten oder Dateidaten gesendet, so können ebenfalls geeignete Maßnahmen zur Verringerung der Bandbreite ergriffen werden.

Aus der EP 0 939 575 A2 ist ein Subraten-Sprachvermitteln in einer Hauptzeitschlitzaustauscheinheit bekannt. Aus der DE 195 07 269 A1 ist ein digitaler Subraten-Multiplexer bekannt für 64 Kbit/s-Datenströme. Um die in der Regel asynchronen Datenströme durch die Subraten-Schnittstellen an die synchronen 64 kbit/s-Datenströme anzupassen (zu synchronisieren), ist es nötig, Füll-Bytes in den Datenstrom einzufügen. Aus der DE 198 22 796 A1 sind ein Verfahren und eine Anordnung zur Echt-Zeitübertragung von komprimierten Daten bekannt.

Es ist Aufgabe der Erfindung ein einfaches Verfahren zum Vermitteln von Verbindungen verringerter Bandbreite anzugeben.

Außerdem sollen eine Vermittlungseinrichtung und eine abgesetzte Anschlußeinheit angegeben werden, mit denen der das Verfahren durchgeführt werden kann.

Die das Verfahren betreffende Aufgabe wird durch ein Verfahren mit den im Patentanspruch 1 angegebenen Verfahrensschritten gelöst. Weiterbildungen sind in den Unteransprüchen angegeben.

Beim erfindungsgemäßen Verfahren werden vor der Vermittlung die in einem Basiskanal übertragenen Nutzdaten nach Nutzkanälen getrennt. Zu den Nutzdaten eines Nutzkanals werden dann Fülldaten hinzugefügt. Anschließend werden die Nutzdaten eines Nutzkanals gemeinsam mit den Fülldaten in einer Koppeleinrichtung vermittelt, wobei Übertragungskanäle gekoppelt werden, die Daten mit der Vermittlungsbandbreite übertragen, d.h. mit 64 kbit/s.

Das vorherige Trennen der Nutzdaten ermöglicht es, die Nutzdaten verschiedener Nutzkanäle in verschiedene Richtungen zu vermitteln. Fülldaten werden hinzugefügt, damit unabhängig von der Übertragungskapazität des Nutzkanals die gleiche Koppeleinrichtung verwendet werden kann.

Bei einer Weiterbildung des erfindungsgemäßen Verfahrens werden die Fülldaten nach der Vermittlung in der Koppeleinrichtung wieder von den Nutzdaten getrennt. Anschließend werden die von den Fülldaten getrennten Nutzdaten zur nächsten Vermittlungsstelle übertragen. Durch diese Maßnahme können gemietete Leitungen, die von der Vermittlungsstelle zu einer anderen Vermittlungsstelle führen, bezüglich der Übertragungsbandbreite besser genutzt werden, weil die Fülldaten nicht mit übertragen werden. Nach der Vermittlung werden die Daten mehrerer Nutzkanäle wieder in einem Basiskanal übertragen. Durch diese Maßnahme lassen sich gemietete Leitungen mit einer festen Übertragungskapazität besser ausnutzen.

Bei einer Ausgestaltung des erfindungsgemäßen Verfahrens werden administrativ, d.h. von einem Netzverwaltungszentrum aus, auf der ankommenden Übertragungsstrecke und auf der abgehenden Übertragungsstrecke Nutzkanäle verringerter Bandbreite festgelegt. Aufgrund der administrativen Festlegung kann auf einer Anschlußeinheit zum Anschluß der betreffenden Übertragungsstrecke die Übertragungsbandbreite berücksichtigt werden. Bei einem Kanal verringerter Bandbreite werden die Fülldaten ergänzt. Bei Kanälen mit einer Bandbreite, die der Vermittlungsbandbreite bereits entspricht, werden keine Fülldaten eingefügt. Die Auswahl eines abgehenden Kanals erfolgt im einfachsten Fall mittels Ziffernbewertung der Rufnummer. Bei bestimmten Rufnummern werden Kanäle der Vermittlungsbandbreite gewählt, während bei anderen Rufnummern Kanäle mit verringerter Bandbreite gewählt werden. Die Bandbreite ist damit an die Zielrufnummer gekoppelt. Die Zielrufnummer muß in jeder nach dem erfindungsgemäßen Verfahren arbeitenden Vermittlungsstelle bewertet werden. In jeder Ubertragungsrichtung gibt es Bündel von Übertragungskanälen der Basisrate (Vermittlungsbandbreite) und einige Bündel verringerter Bandbreite. Die für eine Verbindung zu wählenden Bündel ergeben sich aus der Rufnummer.

Bei einer Weiterbildung werden administrativ auf einer Übertragungsstrecke Nutzkanäle verschiedener Bandbreiten festgelegt. Beim Verbindungsaufbau wird eine Kanalnummer an die Vermittlungseinrichtung signalisiert und eine Steuereinheit der Vermittlungseinrichtung berücksichtigt beim Vermitteln zusätzlich zur Rufnummer auch die Bandbreite des zur Kanalnummer gehörenden Nutzkanals. Dies ermöglicht es, abhängig von der Art einer Verbindung und der Art der zu übertragenden Daten eine geeignete Bandbreite zu wählen. Dabei wird versucht, eine möglichst geringe Bandbreite zu wählen, um beispielsweise gemietete Leitungen hinsichtlich der Bandbreite gut auszunutzen. Wenn nicht alle Daten komprimiert übertragen werden können, z.B. wenn durch einen Teilnehmer eine sogenannte "transparente" Verbindung angefordert wird, so muß ein Übertragungskanal gewählt werden, der die größte Bandbreite, d.h. hier die Vermittlungsbandbreite, hat. Die Zielrufnummer beinhaltet in diesem Fall keine Information über die Bandbreite der Verbindung.

Dadurch, daß die Steuereinheit beim Vermitteln nicht nur die Rufnummer, sondern auch die Bandbreite des zur Kanalnummer gehörenden Nutzkanals berücksichtigt, kann eine abgehende Verbindungsleitung gewählt werden, welche die Übertragungskapazität der Verbindungsleitung hat, auf der die zu vermittelnden Daten ankommen. Letztlich wird erreicht, daß die Übertragungskapazität von Übertragungsstrecken zwischen mehreren aufeinanderfolgenden Vermittlungseinrichtungen gut ausgenutzt werden kann.

Wird bei einer nächsten Weiterbildung durch die Steuereinheit geprüft, ob ein abgehender Kanal gleicher Bandbreite wie ein ankommender Nutzkanal nutzbar ist und wird ein abgehender Kanal mit größerer Bandbreite als die Bandbreite des ankommenden Nutzkanals für die weitere Übertragung der Nutzdaten verwendet, falls ein abgehender Kanal der gleichen Bandbreite wie der ankommenden Nutzkanal nicht verfügbar ist, so muß die Vermittlung nicht abgewiesen werden. Anstelle einer Abweisung wird ein Kanal mit einer größeren Übertragungsbandbreite verwendet.

Bei einer anderen Ausgestaltung des erfindungsgemäßen Verfahrens wird die tatsächlich benötigte Bandbreite für einen Nutzkanal beim Verbindungsaufbau zur folgenden Vermittlungseinrichtung signalisiert. Diese Maßnahme hat zur Folge, daß die Daten eines Nutzkanals streckenweise mit einer größeren Übertragungsbandbreite übertragen werden können, als tatsächlich benötigt. Sobald eine Vermittlungseinrichtung erreicht wird, in der ein Nutzkanal der tatsächlich benötigten Mindestbandbreite zur Verfügung steht, können Fülldaten aus dem Nutzkanal entfernt werden. Die Signalisierung erfolgt innerhalb oder außerhalb des Übertragungskanals. Beispielsweise kann die Signalisierung mithilfe der Kenndaten für den Übertragungsdienst erfolgen, wenn das ISDN-Protokoll (Integrated Services Digital Network) erweitert wird (ISDN-User Part). Eine andere Möglichkeit zum Signalisieren der Übertragungskapazität ist das Übermitteln der Übertragungskapazität in der Subadresse beim ISDN.

Wird das Verfahren bei einer Weiterbildung in einer Vermittlungseinrichtung eines Festnetzes durchgeführt, dessen Endgeräte Daten, z. B. Sprachdaten, mit der Vermittlungsbandbreite erzeugen, so können gemietete Leitungen zwischen den Vermittlungseinrichtungen bei einer Komprimierung der Daten hinsichtlich der Übertragungsbandbreite besser ausgenutzt werden.

Die obengenannte Aufgabe wird außerdem durch ein Programm zur Vermittlung von Verbindungen verringerter Bandbreite gelöst, bei dessen Ausführung durch einen Prozessor die erfindungsgemäßen Verfahrensschritte bzw. die Verfahrensschritte einer Weiterbildung des erfindungsgemäßen Verfahrens ausgeführt werden. Somit gelten die oben genannten technischen Wirkungen auch für das Programm.

Weiterhin wird die oben genannte Aufgabe durch eine Vermittlungseinrichtung und durch eine abgesetzte Einheit gelöst, bei deren Betrieb die Verfahrensschritte des erfindungsgemäßen Verfahrens oder dessen Weiterbildungen ausgeführt werden.

Bei einer Ausgestaltung der erfindungsgemäßen Vermittlungseinrichtung berücksichtigt die Steuereinheit der Vermittlungseinrichtung beim Vermitteln zusätzlich zur Rufnummer auch eine beim Verbindungsaufbau an die Vermittlungseinrichtung signalisierte, für die Übertragung zur Verfügung stehende Mindestbandbreite der Verbindung. Aufgrund der Vorwärtssignalisierung zwischen den Vermittlungseinrichtungen können an verschiedenen Übertragungsabschnitten Übertragungskanäle verschiedener Bandbreiten genutzt werden. Die Signalisierungsdaten erlauben es, später zur Mindestbandbreite zurückzukehren.

Bei einer anderen Ausgestaltung der erfindungsgemäßen Vermittlungseinrichtung werden in der Anschlußeinheit mit Hilfe einer Anpassungseinheit die Fülldaten hinzugefügt oder entfernt. Das Entfernen bzw. Hinzufügen der Fülldaten erfolgt abhängig von der Bandbreite des beteiligten Übertragungskanals und/oder abhängig von der signalisierten Mindestbandbreite. Das Hinzufügen bzw. Entfernen der Fülldaten in der Anpassungseinheit gewährleistet die Anpassung der Bandbreite bei der Übertragung.

Die erfindungsgemäße abgesetzte Anschlußeinheit wird beim erfindungsgemäßen Verfahren zum Vermitteln von Verbindungen verringerter Bandbreite verwendet. Die abgesetzte Anschlußeinheit wird entweder direkt mit einer Anschlußeinheit verbunden, in welcher das erfindungsgemäße Verfahren bzw. eine seiner Weiterbildungen ausgeführt wird. Alternativ wird die abgesetzte Anschlußeinheit an einer Anschlußeinheit einer Vermittlungsstelle angeschlossen, welche nicht die Verfahrensschritte gemäß erfindungsgemäßem Verfahren durchführt. Jedoch sind in der Vermittlungsstelle Anschlußeinheiten enthalten, die das erfindungsgemäße Verfahren bzw. dessen Weiterbildungen ausführen. Verbindungen werden unter zweifacher Nutzung eines Hauptkoppelfeldes der Vermittlungseinrichtung sowohl über eine Anschlußeinheit geschaltet, die die Verfahrensschritte gemäß erfindungsgemäßen Verfahren durchführt, als auch unter Verwendung einer Anschlußeinheit, die das erfindungsgemäße Verfahren nicht durchführt. Durch diese Maßnahme ist es möglich, die Verbindungen mehrerer erfindungsgemäßer Anschlußeinheiten zu bündeln. Außerdem wird durch die zweifache Vermittlung im Koppelfeld eine größere Flexibilität erreicht.

Im folgenden wird die Erfindung anhand der beiliegenden Zeichnungen erläutert. Darin zeigen:
- Figur 1: ein Telekommunikationsnetz gemäß dem Stand der Technik,
- Figur 2: eine Vermittlungsstelle mit mehreren Anschlußbaugruppen,
- Figur 3: eine Anschlußbaugruppe mit mehreren Anschlußeinheiten,
- Figur 4: Vermittlungsvorgänge in der Vermittlungsstelle,
- Figur 5: die Signalisierung der Übertragungskapazität zwischen Vermittlungsstellen, und
- Figur 6: eine von einer Vermittlungsstelle abgesetzte Einheit.

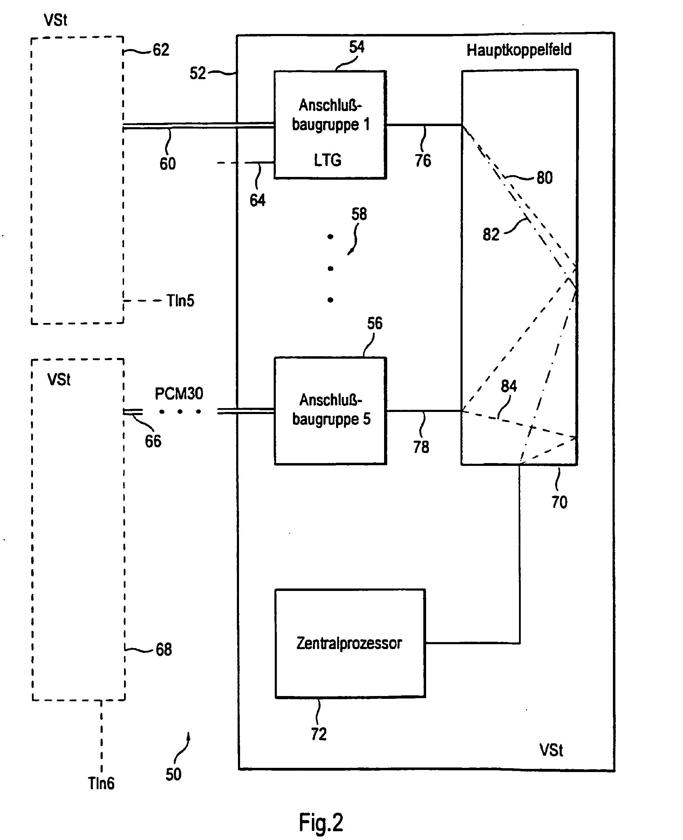

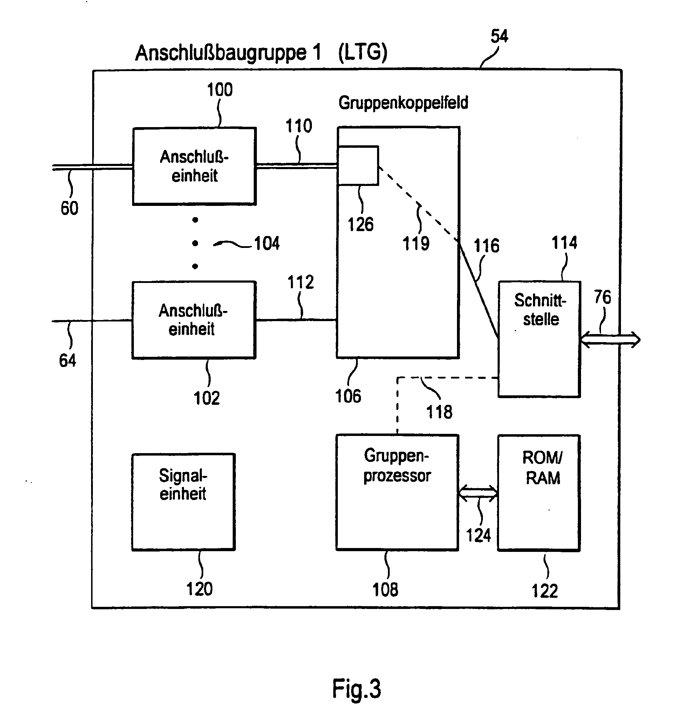

Figur 2 zeigt in einem Telekommunikationsnetz 50 eine Vermittlungsstelle 52, auch VSt abgekürzt, mit mehreren Anschlußbaugruppen 54 und 56. Durch Punkte 58 sind weitere Anschlußbaugruppen angedeutet. Der Aufbau der Anschlußbaugruppe 54 wird unten anhand der Figur 3 erläutert.

Eine Verbindungsleitung 60 verbindet die Vermittlungsstelle 52 mit einer Vermittlungsstelle 62. Auf der Verbindungsleitung 60 werden digitalisierte Daten, z. B. Sprachdaten, gemäß PCM30 (PCM = Pulse Code Modulation) in 30 Basiskanälen übertragen. In zwei weiteren Übertragungskanälen werden Synchronisierungs- und falls erforderlich Signalisierungsdaten übertragen. In jedem Basiskanal werden die Sprachdaten von vier Nutzkanälen in komprimierter Form übertragen, das heißt mit einer Übertragungskapazität von 16 kbit/s. Eine Komprimierung auf einer Leitung wird im folgenden durch eine Doppellinie dargestellt, vgl. z. B. Verbindungsleitung 60.

Die Verbindungsleitung 60 endet an der Anschlußbaugruppe 54, die zum Anschließen von Leitungen zwischen Vermittlungsstellen an die Vermittlungsstelle 52 dient. Eine weitere mit der Anschlußbaugruppe 54 verbundene Verbindungsleitung 64 führt beispielsweise zu einer nicht dargestellten Vermittlungsstelle.

Die Anschlußbaugruppe 56 ist ähnlich wie die Anschlußbaugruppe 54 aufgebaut. Eine Verbindungsleitung 66 verbindet die Anschlußbaugruppe 56 mit einer Vermittlungsstelle 68. Auf der Verbindungsleitung 66 werden Daten gemäß PCM30-System übertragen.

Ein Teil, der durch die Punkte 58 angedeuteten Anschlußbaugruppen dient zum Anschluß von Leitungen, die zu Teilnehmeranschlüssen führen, beispielsweise zu Telekommunikationsanlagen oder zu Konzentratoren. Auf den an diese Anschlußbaugruppen angeschlossenen Leitungen wird gemäß einer Teilnehmersignalisierung signalisiert, z.B. gemäß Protokoll E-DSS1 (Euro-Digital Signalling System One).

Die Vermittlungsstelle 52 enthält weiterhin ein Hauptkoppelfeld 70 sowie einen Zentralprozessor 72. Sämtliche Anschlußbaugruppen 54 bis 56 sind mit dem Hauptkoppelfeld 70 über Verbindungsleitungen verbunden, von denen in Figur 2 Verbindungsleitungen 76 und 78 dargestellt sind. Jede Verbindungsleitung 76, 78 hat eine Übertragungskapazität von acht Mbit/s, so daß jeweils Sprach- bzw. Steuerungsdaten über 128 Übertragungskanäle übertragen werden können. Der Zentralprozessor 72 steuert das Schalten von Verbindungen im Koppelfeld 70. Beispielsweise schaltet der Zentralprozessor 72 einen Sprachkanal 80, über den ein an der Vermittlungsstelle 62 angeschlossener Teilnehmer Tln5 mit einem an die Vermittlungsstelle 68 angeschlossener Teilnehmer Tln6 sprechen kann. Ein Meldungskanal 82 wird vor dem Verbindungsaufbau von der Anschlußbaugruppe 54 verwendet, um dem Zentralprozessor 72 mitzuteilen, daß der Sprachkanal 82 aufgebaut werden soll. Nach dem Durchschalten der Verbindung mit Hilfe des Sprachkanals 80 werden weitere Steuerdaten zwischen der Anschlußbaugruppe 54 und dem Zentralprozessor 72 ausgetauscht. Zwischen der Anschlußbaugruppe 56 und dem Zentralprozessor 72 werden Steuerdaten über einen Meldungskanal 84 ausgetauscht.

Der Sprachkanal 80 und die Meldungskanäle 82, 84 haben eine Übertragungskapazität von 64 kbit/s. Das Hauptkoppelfeld 70 ist nur in der Lage, 64 kbit/s-Verbindungen zu schalten.

Figur 3 zeigt den Aufbau der Anschlußbaugruppe 54, in der vier Anschlußeinheiten enthalten sind, von denen in Figur 3 zwei Anschlußeinheiten 100 und 102 dargestellt sind. Durch Punkte 104 sind weitere Anschlußeinheiten angedeutet. Die Verbindungsleitung 60 ist mit der Anschlußeinheit 100 verbunden. An der Anschlußeinheit 102 ist die Leitung 64 angeschlossen, auf der unkomprimierte Sprachdaten in 30 Sprachkanälen gemäß PCM30-Standard übertragen werden.

Die Anschlußbaugruppe 54 enthält weiterhin ein Gruppen-Koppelfeld 106 und einen Gruppen-Prozessor 108. Die Anschlußeinheiten 100, 102 sind über Verbindungsleitungen 110, 112 mit dem Gruppen-Koppelfeld 106 verbunden, so daß im Gruppen-Koppelfeld 106 Verbindungen zwischen den Anschlußeinheiten 100, 102 und einer Schnittstelle 114 geschaltet werden. Die Schnittstelle 114 ist über eine Verbindungsleitung 116 mit dem Gruppen-Koppelfeld 106 und über eine Verbindungsleitung 118 mit dem Gruppen-Prozessor 108 verbunden. Auf der anderen Seite der Schnittstelle 114 ist die Verbindungsleitung 76 angeschlossen.

Die in Figur 2 dargestellte Verbindung 80 für das Gespräch zwischen den Teilnehmern Tln5 und Tln6 wird unter Verwendung einer Verbindung 119 im Gruppen-Koppelfeld 106 geschaltet. Die Anschlußeinheiten 100, 102 sind über ein nicht dargestelltes BUS-System mit dem Gruppen-Prozessor 108 verbunden. Der Gruppen-Prozessor 108 steuert über das BUS-System das Schalten von Verbindungen im Gruppen-Koppelfeld 106.

Die Anschlußbaugruppe 54 enthält auch eine Signaleinheit 120, die u.a. einen Tongenerator, einen Zeitimpulsgeber und einen Doppelton-Selektivruf-Empfänger (DTMF - Dual Tone Multi Frequency) enthält. Die Signaleinheit 120 ist über nicht dargestellt Verbindungen mit den Anschlußeinheiten 100, 102, dem Gruppen-Koppelfeld 106 und mit dem Gruppen-Prozessor 58 verbunden.

In der Anschlußbaugruppe 54 ist außerdem eine Speichereinheit 122 enthalten, die über einen BUS 124 mit dem Gruppen-Prozessor 108 verbunden ist. In der Speichereinheit 122 sind Programme gespeichert, bei deren Abarbeitung durch den Gruppen-Prozessor 108 die Signalisierung und die Verbindungssteuerung realisiert werden.

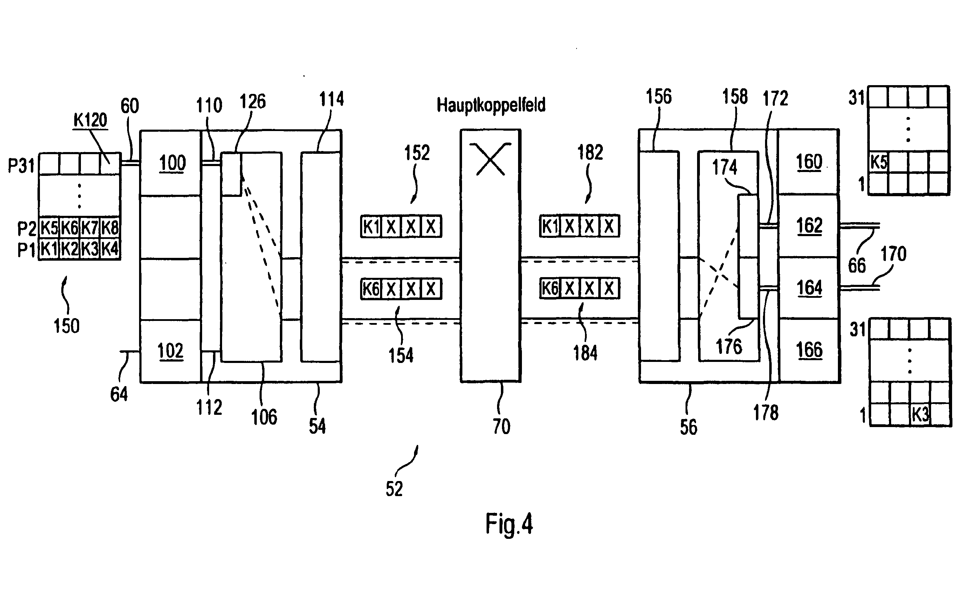

Zwischen Verbindungsleitungen, auf denen komprimierte Sprachdaten übertragen werden und dem Gruppen-Koppelfeld 106 befinden sich Anpassungseinheiten, z.B. eine Anpassungseinheit 126 für die Verbindungsleitung 110. Die Funktionsweise der Anpassungseinheiten 126 wird unten anhand der Figur 4 erläutert.

Figur 4 zeigt Vermittlungsvorgänge in der Vermittlungsstelle 52. Zwischen der Vermittlungsstelle 62 und der Vermittlungsstelle 52 gibt es in jeder Ubertragungsrichtung Bündel mit Kanälen einer Ubertragungsbandbreite kleiner 64 kbit/s. Die Kanäle der geringeren Übertragungsrate haben beispielsweise eine Übertragungsbandbreite von n*8 kbit/s, wobei n eine natürliche Zahl größer Eins ist. Es ergeben sich somit Bandbreiten für Kanäle mit verringerter Bandbreite von 8 kbit/s, 16 kbit/s usw. Das Festlegen der Übertragungsbandbreiten erfolgt administrativ, d.h. von einem Netzverwaltungszentrum aus.

Aus logischer Sicht gibt es dann in einem PCM30-System beispielsweise 120 Nutzkanäle K1 bis K120 mit einer Übertragungsbandbreite von 16 kbit/s. Vom Netzverwaltungszentrum aus werden den Nutzkanälen Kanalnummern zugewiesen, die jeweils einen Nutzkanal an einer bestimmten Stelle im PCM-Zeitrahmen bezeichnen. In Figur 4 sind z.B. dem physikalischen PCM-Kanal P1 die vier Nutzkanäle K1 bis K4 zugewiesen. Im physikalischen Kanal P16 können Signalisierungsdaten übertragen werden. Die Zuordnung zwischen logischer Kanalnummer und physikalischer Lage ist in den durch eine Verbindungsleitung verbundenen Vermittlungsstellen identisch. Die Signalisierung zwischen den Vermittlungsstellen wird heute üblicherweise in einem getrennten Signalisierungsnetz (CCITT Nr. 7) übertragen, so daß die Signalisierung vom Sprachkanal getrennt durchgeführt wird.

Bei der Signalisierung werden die Nutzkanäle K1 bis K120 über ihre logische Kanalnummer bezeichnet. Erfolgt eine Belegung eines Kanals auf einer derart eingerichteten Verbindungsleitung, so wird aus der logischen Kanalnummer in der Anschlußbaugruppe 54 die Übertragungsrate des bezeichneten Kanals und seine physikalische Lage bestimmt.

In der Anpassungseinheit 126 werden die ankommenden zwei Bit langen Sprachdatenworte des bezeichneten Kanals in vorgegebener Weise in ein Datenwort eines 64 kbit/s-Kanals eines PCM-Rahmens mit einer Wortlänge von acht Bit eingeschrieben. Verbleibende Bitstellen werden mit Fülldaten X beschrieben, beispielsweise durch Zuweisung des Wertes Null zu den zu füllenden Bitstellen. Ein von der Anpassungseinheit 126 erzeugtes Datenwort 152 enthält in den ersten beiden Bitstellen Sprachdaten des Nutzkanals K1. Die weiteren sechs Bitstellen des Datenworts 152 sind mit Fülldaten X gefüllt.

Ein Datenwort 154 enthält in den ersten zwei Bitstellen Sprachdaten des Nutzkanals K6. Die weiteren Bitstellen des Datenworts 154 sind mit Fülldaten X belegt. Somit gelangen von der Anschlußbaugruppe 54 zum Hauptkoppelfeld 70 nur Datenworte mit einer Bitlänge von acht Bit und in durchzuschaltenden Kanälen mit einer Übertragungsrate von 64 kbit/s.

In Figur 4 ist auch der Aufbau der Anschlußbaugruppe 56 gezeigt. Der Aufbau der Anschlußbaugruppe 56 entspricht im wesentlichen dem Aufbau der Anschlußbaugruppe 54. In Figur 4 ist eine Schnittstelle 156 gezeigt, deren Funktion der Funktion der Schnittstelle 114 entspricht. Ein Gruppen-Koppelfeld 158 in der Anschlußbaugruppe 56 hat den gleichen Aufbau und die gleiche Funktion wie das Gruppen-Koppelfeld 106 in der Anschlußbaugruppe 54. Die Anschlußbaugruppe 56 enthält weiterhin vier Anschlußeinheiten 160 bis 166. An den Anschlußeinheiten 162 und 164 sind Verbindungsleitungen 168, 170 angeschlossen, auf denen Daten der Bandbreite 64 kbit/s, z. B. Sprachdaten, in komprimierter Form übertragen werden. Die Zuordnung von Kanalnummern und physikalischer Lage im PCM-Zeitrahmen auf den Verbindungsleitungen 168, 170 wurde ebenfalls von einem Netzverwaltungszentrum aus vorgegeben.

Zwischen dem Gruppen-Koppelfeld 158 und einer zur Anschlußbaugruppe 162 führenden Verbindungsleitung 172 gibt es eine Anpassungseinheit 174. Eine Anpassungseinheit 176 liegt zwischen Gruppen-Koppelfeld 158 und einer Verbindungsleitung 178, die zur Anschlußeinheit 164 führt.

Nachdem die Datenworte 152 und 154 im Hauptkoppelfeld 70 vermittelt worden sind, werden sie in unveränderter Form als Datenworte 182 bzw. 184 zur Anschlußbaugruppe 56 übertragen und im Gruppen-Koppelfeld 158 aufgrund der Zielrufnummer zu einer der Anschlußeinheiten 160 bis 166 vermittelt. Das Datenwort 182, das dem Datenwort 152 entspricht, wird zur Anschlußeinheit 164 vermittelt. In der Anpassungseinheit 176 werden die Fülldaten X aus dem Datenwort 182 entfernt. Die ursprünglich im Nutzkanal K1 übertragenen Sprachdaten werden nun einem Nutzkanal K3 mit einer Übertragungsbandbreite 16 kbit/s auf der Verbindungsleitung 170 zugewiesen.

Das Datenwort 184 gelangt über die Schnittstelle 156 und das Gruppen-Koppelfeld 158 zu der Anpassungseinheit 174. In der Anpassungseinheit 174 werden die Fülldaten X aus dem Datenwort 184 entfernt und die ursprünglich im Nutzkanal K6 übertragenen Sprachdaten werden einem Nutzkanal K5 auf der Verbindungsleitung 168 zugewiesen.

Unter Berücksichtigung der Rufnummer wählt der Zentralprozessor somit ein für die Verbindung geeignetes ausgangsseitiges Kanalbündel aus und stellt das Hauptkoppelfeld 70 so ein, daß die Daten zur betreffenden Anschlußbaugruppe gelangen.

Die vermittlungstechnische Funktion der Vermittlungsstelle bleibt somit im Vergleich zur Funktion herkömmlicher Vermittlungsstellen unverändert. Die Umsetzung zwischen logischer Kanalnummer und physikalischer Lage wird administrativ festgelegt, so daß die vermittlungstechnische Funktion der Vermittlungsstelle 52 nicht betroffen ist. Die Umsetzung zwischen logischer Kanalnummer und physikalischer Lage selbst erfolgt dann ausschließlich in den Anschlußeinheiten.

Wie aus Figur 4 ersichtlich, können Anschlußeinheiten 102, 160 und 166 unverändert bleiben, welche ausschließlich Daten mit einer Übertragungsbandbreite von 64 kbit/s übertragen. Die zur Durchschaltung von Subraten geeigneten Anschlußbaugruppen 100, 162, 164 werden zusätzlich zu den bisher benutzten Anschlußbaugruppen je nach Bedarf in die Vermittlungsstelle als integraler Bestandteil eingebaut. Das bedeutet, daß kein zusätzliches Gehäuse, kein zusätzliches Bediensystem zur Subratenbehandlung und keine zusätzliche Stromversorgung für die Durchführung des erfindungsgemäßen Verfahrens mit geeigneten Anschlußbaugruppen erforderlich sind.

Das Hauptkoppelfeld 70 muß ebenfalls nicht verändert werden, wenn Anschlußbaugruppen 100, 162 und 164 verwendet werden, die zur Bearbeitung von Sprachkanälen mit Subraten von 64 kbit/s geeignet sind. Das Hauptkoppelfeld 70 schaltet wie bisher ausschließlich Verbindungswege mit einer Übertragungskapazität von 64 kbit/s durch.

Bei dem anhand der Figuren 2 bis 4 beschriebenen Ausführungsbeispiel gibt es in einem Netz eines Netzbetreibers somit mehrere von einander unabhängige leitungsvermittelnde Netze mit unterschiedlichen Bandbreiten. Die leitungsvermittelnden Netze unterschiedlicher Bandbreiten können von mehreren über verschiedene Standorte ausgedehnten privaten Netzen mit unterschiedlichen Bandbreiten genutzt werden. Aus der Sicht des Netzbetreibers ergibt sich eine verbesserte Nutzung von gemieteten Übertragungsstrecken mit einer begrenzten Bandbreite.

Die Aufteilung in unabhängige leitungsvermittelnde Netze führt zu einer Fragmentierung der Übertragungskapazität auf den gemieteten Verbindungswegen. Diese Fragmentierung steht einem Wechsel zwischen den leitungsvermittelnden Netzen unterschiedlicher Bandbreite zunächst entgegen. Im folgenden wird anhand eines weiteren Ausführungsbeispiels erläutert, wie sich die gemieteten Übertragungsstrecken trotz Fragmentierung noch besser ausnutzen lassen.

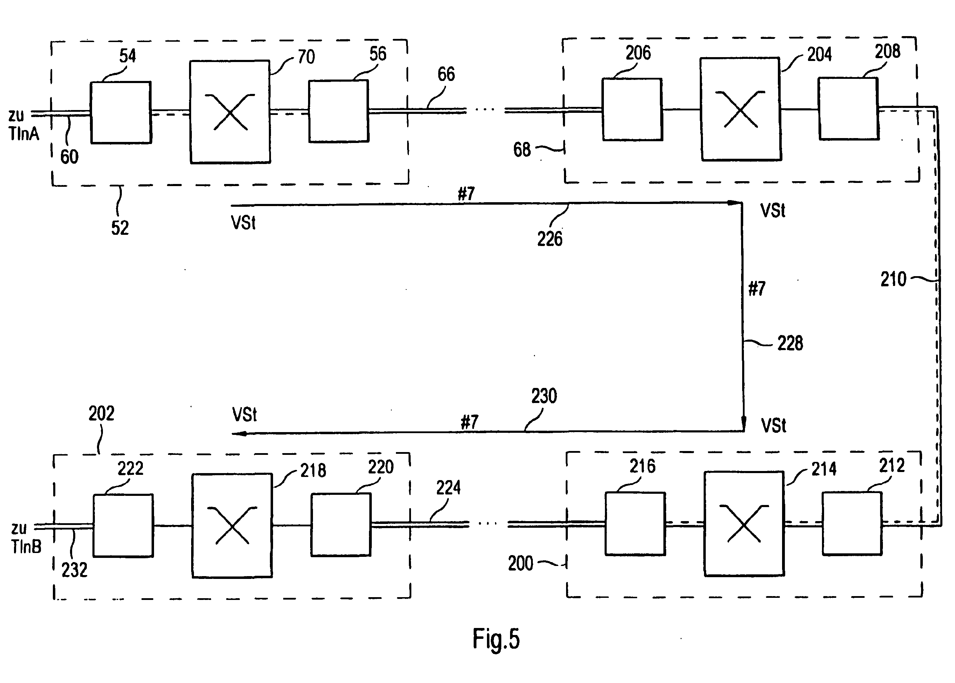

Figur 5 zeigt die Übertragung von zusätzlichen Signalisierungsdaten zwischen der Vermittlungsstelle 52 und 68 sowie Vermittlungsstellen 200 und 202. Die Vermittlungsstelle 68 enthält neben einem Hauptkoppelfeld 204 eine mit der Verbindungsleitung 66 verbundene Anschlußbaugruppe 206 sowie eine Anschlußbaugruppe 208. Die Anschlußbaugruppe 208 ist mit einer Verbindungsleitung 210 verbunden, die von der Vermittlungsstelle 68 zur Vermittlungsstelle 200 führt. Die Verbindungsleitung 210 ist in der Vermittlungsstelle 200 an eine Anschlußbaugruppe 212 angeschlossen. Die Anschlußbaugruppe 212 überträgt auf der Verbindungsleitung 210 ankommende Daten zu einem Hauptkoppelfeld 214 der Vermittlungsstelle 200. In der Vermittlungsstelle 200 befindet sich außerdem eine Anschlußbaugruppe 216.

Die Vermittlungsstelle 202 enthält ein Hauptkoppelfeld 218 sowie zwei Anschlußbaugruppen 220 und 222. Die Vermittlungsstellen 200 und 202 sind über eine Verbindungsleitung 224 miteinander verbunden, deren eines Ende mit der Anschlußbaugruppe 216 und deren anderes Ende mit der Anschlußbaugruppe 220 verbunden ist.

Die Vorgänge in der Vermittlungsstelle 52 entsprechen den anhand der Figuren 2 bis 4 erläuterten Vorgängen. Somit werden auf der Verbindungsleitung 66 komprimierte Daten in Übertragungskanälen verringerter Übertragungsbandbreite übertragen, z.B. mit einer Übertragungsbandbreite von 16 kbit/s. Die Anschlußbaugruppe 206 in der Vermittlungsstelle 68 ist im wesentlichen wie die Anschlußbaugruppe 54 bzw. 56 aufgebaut, d.h. auch sie enthält Anpassungseinheiten, mit denen Fülldaten X vor dem Übertragen der Daten zum Hauptkoppelfeld 204 hinzugefügt bzw. mit denen Fülldaten X aus vom Hauptkoppelfeld 204 zur Anschlußbaugruppe 206 übertragenen Daten entfernt werden können.

Die Steuerung der Vermittlungsstellen 52, 68, 200 und 202 wurde jedoch dahingehend erweitert, daß mit Hilfe des zur Zwischenamtssignalisierung verwendeten Signalisierungsverfahrens (z. B. erweitertes Verfahren gemäß CCITT Nr. 7) auch die Übertragungsbandbreiten der in den Nutzkanälen übertragenen Daten übertragen werden. Die zwischen zwei Vermittlungsstellen zur Verfügung gestellte Bandbreite kann aufgrund der Vorwärtssignalisierung von der Mindestbandbreite abweichen. Von der Vermittlungsstelle 52 wird beispielsweise zur Vermittlungsstelle 68 signalisiert, daß in einem Nutzkanal mit der Übertragungsbandbreite von 16 kbit/s Daten übertragen werden, die eine Übertragungsbandbreite von ebenfalls 16 kbit/s für die Übertragung benötigen, vergleiche Pfeil 226. Ist für die Vermittlung in der Vermittlungsstelle 68 kein physikalischer Übertragungskanal mit einer Bandbreite von 16 kbit/s verfügbar, so wird ein Kanal mit einer höheren Bandbreite gewählt, beispielsweise mit einer Bandbreite von 32 kbit/s oder 64 kbit/s. Dies bedeutet, daß ein Teil der Fülldaten X oder alle Fülldaten X in den mit Hilfe des Hauptkoppelfeldes 204 vermittelten Daten verbleiben. Auf der Übertragungsstrecke 210 werden die Nutzdaten somit gemeinsam mit Fülldaten X übertragen. Dies wird durch eine durchgezogene Linie verdeutlicht, die zu einer gestrichelten Linie parallel verläuft. Die Vermittlungsstelle 68 signalisiert ebenfalls gemäß dem verwendeten Zwischenamtssignalisierungsverfahren (z. B. einem erweiterten Verfahren nach CCITT Nr. 7), daß die tatsächlich benötigte Bandbreite 16 kbit/s beträgt. Anhand dieser Signalisierungsdaten ist es in der Vermittlungsstelle 200 möglich, zu erkennen, daß die auf der Verbindungsleitung 210 verwendete Übertragungskapazität über der tatsächlich für die Verbindung benötigten Mindestbandbreite liegt. Die Steuerung der Vermittlungsstelle 200 wird somit prüfen, ob ausgangsseitig ein

Übertragungskanal zur weiteren Übertragung verwendet werden kann, der eine verringerte Übertragungsbandbreite von 16 kbit/s hat. In der Anschlußbaugruppe 216 werden die Fülldaten X wie oben für die Anschlußbaugruppe 56 erläutert entfernt.

Auf der Verbindungsleitung 224 werden die Daten des betrachteten Nutzkanals dann wieder mit einer Übertragungsbandbreite von 16 kbit/s zur Vermittlungsstelle 202 übertragen. Die Vermittlungsstelle 200 signalisiert gemäß dem verwendeten Zwischenamtssignalisierungsverfahren (z. B. einem erweiterten Verfahren nach CCITT Nr. 7) an die Vermittlungsstelle 202, daß die im betrachteten Nutzkanal übertragenen Daten für ihre Übertragung eine Bandbreite von 16 kbit/s benötigen, vergleiche Pfeil 230. In der Vermittlungsstelle 202 werden ähnliche Verfahrensschritte ausgeführt, wie oben für die Vermittlungsstelle 52 erläutert. Auf einer auf der Anschlußbaugruppe 202 angeschlossenen Verbindungsleitung 230 werden die Sprachdaten nach der Vermittlung in der Vermittlungsstele 202 in komprimierte Form weiter in Richtung zum Teilnehmer TlnB übertragen.

Durch das Vorwärtssignalisieren der Bandbreite der Verbindungen von einer Vermittlungsstelle zur nächsten Vermittlungsstelle, in welcher die Nutzdaten vermittelt werden, ergibt sich insbesondere die Möglichkeit, Streckenabschnitte ohne Bandbreitenbegrenzung mit einer Übertragungsbandbreite von 64 kbit/s zu nutzen. Eine Verringerung der Bandbreite muß nur vor der Übertragung auf Übertragungsstrecken durchgeführt werden, die hinsichtlich der Bandbreite begrenzt sind, d.h. beispielsweise gemieteten Übertragunggsstrecken. Die zur Bearbeitung von Subraten geeigneten Anschlußbaugruppen müssen dann nur in einigen Vermittlungsstellen entlang des Übertragungsweges eingesetzt werden.

Die Signalisierungsvorgänge innerhalb einer Vermittlungstelle sollen an Hand der Signalisierung in der Vermittlungsstelle 68 erläutert werden. Ein nicht dargestellter Zentralprozessor der Vermittlungsstelle 68 wertet die vorwärtssignalisierte Bandbreite von 16 Kbit/s sowie die ebenfalls signalisierte Zielrufnummer aus. Diese Daten werden dem Zentralprozessor in der Regel vor der A-seitigen Anschlußbaugruppe 204 gemeldet. Der Zentralprozessor bestimmt auf Grund der Signalisierung die B-seitige Anschlußbaugruppe 208. Dabei wird so vorgegangen, daß er für die aus der Rufnummer ableitbare Richtung einen freien Übertragungskanal der Mindestbandbreite von 16 kbit/s sucht. Steht für die gewünschte Richtung nur ein Kanal höherer Bandbreite, z. B. 64 kbit/s, zur Verfügung, so wird ein solcher Kanal auswählt, wodurch die B-seitige Anschlußbaugruppe 208 implizit bestimmt ist. Die Anschlußbaugruppe 208 wird über die Mindestbandbreite von 16 kbit/s informiert und Signalisiert diese an die nachfolgende Vermittlungsstelle 200 weiter, vgl. Pfeil 228.

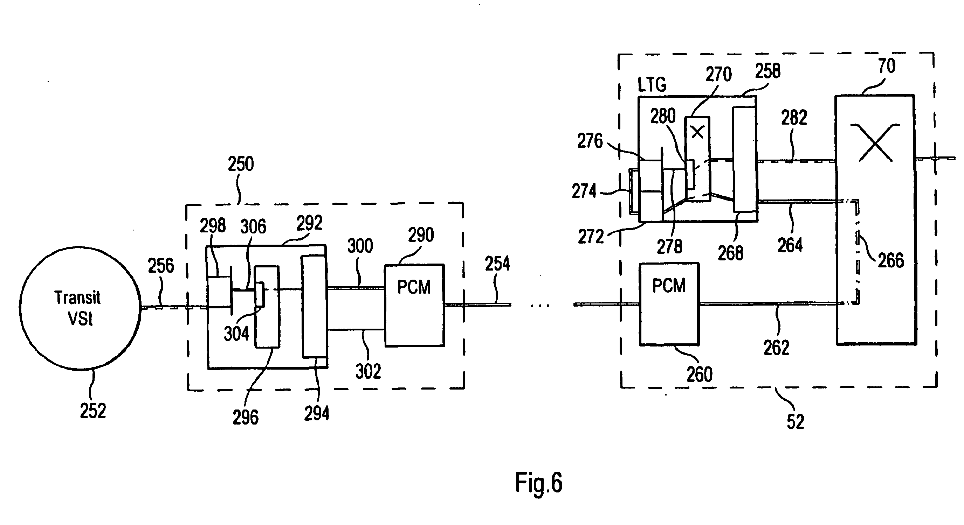

Figur 6 zeigt eine von der Vermittlungsstelle 52 abgesetzte Einheit 250, die mehrere Kilometer von der Vermittlungsstelle 52 und z. B. unmittelbar in oder an einer Transitvermittlungsstelle 252 aufgestellt ist. Vermittlungsstelle 52 und abgesetzte Einheit 250 sind mit Hilfe einer Verbindungsleitung 254 verbunden, auf welcher Vebindungen verringerter Bandbreite, z. B. komprimierte Sprachdaten, in einem PCM30-Träger übertragen werden. Die abgesetzte Einheit 250 ist mit der Transitvermittlungsstelle 252 über eine kurze Verbindungsleitung 256 verbunden.

Die Vermittlungsstelle 52 enthält neben dem oben bereits in seiner Funktion erläuterten Hauptkoppelfeld 70 eine Anschlußbaugruppe 258, die mehrere Anpassungseinheiten enthält, um Fülldaten X einzufügen bzw. zu entfernen. Außerdem enthält die Vermittlungsstelle 52 eine PCM-Schnittstelle 260, an welche das zur Vermittlungsstelle 52 führende Ende der Verbindungsleitung 254 angeschlossen ist. Die PCM-Schnittstelle 260 ist für Übertragungskanäle mit einer Übertragungsbandbreite von 64 kbit/s definiert und ist über eine Leitung 262 mit dem Hauptkoppelfeld 70 verbunden. Auf der Leitung 262 werden ebenfalls komprimierte Daten übertragen und unverändert im Hauptkoppelfeld zu einer Leitung 264 durchgeschaltet, vergleiche Übertragungskanal 266.

Das andere Ende der Leitung 264 ist mit einer Schnittstelle 268 der Anschlußbaugruppe 258 verbunden. Die Schnittstelleneinheit 268 hat die gleiche Funktion wie die oben anhand der Figur 3 erläuterte Schnittstelle 114. Die auf der Leitung 264 übertragenen Daten werden durch ein Gruppen-Koppelfeld 270 der Anschlußbaugruppe 258 zu einer Anschlußeinheit 272 vermittelt. An der Anschlußeinheit 272 ist eine Leitung 274 angeschlossen, auf der die Sprachdaten wieder gemäß PCM30-System übertragen werden. Die Leitung 254 führt zu einer Anschlußeinheit, wie sie oben anhand der Figur 3 erläutert worden ist, z. B. zu einer der Anschlußeinheit 272 benachbarten Anschlußeinheit 276 in der Anschlußbaugruppe 258. Die Anschlußeinheit 276 arbeitet wie die oben anhand der Figur 4 erläuterte Anschlußeinheit 100. Eine Leitung 278 führt von der Anschlußeinheit 100 unter Zwischenschaltung einer Anpassungseinheit 280 zum Gruppen-Koppelfeld 270. Die Anpassungseinheit 280 überträgt die Daten der Verbindung verringerter Bandbreite, z. B. die komprimierten Sprachdaten, in Kanälen mit einer Übertragungsbandbreite von 64 kbit/s, wobei gleichzeitig Fülldaten X angefügt werden, um die Übertragungsbandbreite eines Nutzkanals zu erhöhen. Über das Gruppen-Koppelfeld 270 und die Schnittstelle 268 gelangen die mit Fülldaten ergänzten Daten eines Nutzkanals dann über eine Leitung 282 zum Hauptkoppelfeld 70. Im Hauptkoppelfeld 70 werden die Daten dann vermittelt.

Die abgesetzte Einheit 250 enthält ebenfalls eine PCM-Schnittstelle 290, die mit dem zur abgesetzten Einheit 250 führenden Ende der Verbindungsleitung 254 verbunden ist. Außerdem enthält die abgesetzte Einheit 250 eine Anschlußbaugruppe 292, deren Aufbau im wesentlichen dem Aufbau der oben anhand der Figur 4 erläuterten Anschlußbaugruppe 100 entspricht. So enthält die Anschlußbaugruppe 292 eine Schnittstelle 294, ein Gruppen-Koppelfeld 296 und eine Anschlußeinheit 298. Mit der Schnittstelle 294 sind Übertragungsstrecken 300 und 302 verbunden, die zur PCM-Schnittstelle 290 führen. Auf der Übertragungsstrecke 300 werden Bündel von Nutzkanälen verringerter Bandbreite und Bündel aus Sprachkanälen mit einer Übertragungsbandbreite von 64 kbit/s übertragen. Auf der Übertragungsstrecke 302 werden die Daten zweier Steuerkanäle übertragen, die eine Bandbreite von jeweils 64 kbit/s haben.

Die Anschlußeinheit 298 ist mit dem zur abgesetzten Einheit 250 führenden Ende der Verbindungsleitung 256 verbunden. Auf der Verbindungsleitung 256 werden Verbindungen verringerter Bandbreite, z. B. komprimierte Sprachdaten, in Basiskanälen der Übertragungsbandbreite von 64 kbit/s gemeinsam mit Fülldaten X übertragen. Die Anschlußeinheit 298 ist mit dem Gruppen-Koppelfeld 296 unter Zwischenschaltung einer Anpassungseinheit 304 über eine Leitung 306 verbunden. In der Anpassungseinheit 304 werden Fülldaten X aus den Datenworten entfernt, so daß die komprimierten Sprachdaten in verdichteter Form zur Schnittstelle 294 weitergeleitet werden.

Durch das Verwenden der abgesetzten Einheit 250 wird erreicht, daß die Übertragungsstrecke 254 für die Übertragung einer Vielzahl von Nutzkanälen benutzt werden kann, auch wenn die Transitvermittlungsstelle 252 keine Anschlußbaugruppen besitzt, die Kanäle mit Subraten von 64 kbit/s bearbeiten können.

In der anderen Übertragungsrichtung gibt es ebenfalls eine nicht dargestellte Verbindungsleitung, die der Verbindungsleitung 254 entspricht. In der abgesetzten Einheit 250 werden Fülldaten X ergänzt, bevor die Sprachdaten zur Transitvermittlungsstelle 252 weiter übertragen werden.

Die an Hand der Figur 6 erläuterte abgesetzte Einheit 250 läßt sich auch ohne Vorwärtssignalisierung der Übertragungskapazität zwischen den beteiligten Vermittlungsstellen 52, 252 einsetzen. An Hand der Zielrufnummer wird in diesem Fall die Übertragung mit einer Subrate von 64 kbit/s über die abgesetzte Einheit 250 veranlaßt. Die Transitvermittlungsstelle 252 schaltet ebenfalls aufgrund der Zielrufnummer die mit Fülldaten auf 64 kbit/s expandierten Daten der Subratenübertragungskapazität in Richtung der Zielvermittlungsstelle weiter. Auf dem Weg dorthin werden dann Vermittlungsstellen durchlaufen, die dem erfindungsgemäßen Verfahren entsprechende Funktionen haben, also insbesondere beim Übergang von Bündeln unterschiedlicher Übertragungsbandbreite den Nutzkanälen Fülldaten hinzufügen bzw. Fülldaten aus Nutzkanälen entfernen.

Jedoch wird bei einem weiteren Ausführungsbeispiel auch beim Verwenden der abgesetzten Einheit 52 die Übertragungskapazität zwischen den Vermittlungsstellen 52,22 vorwärts signalisiert.

Durch die mitgeführte Signalisierungsinformation, vergleiche Erläuterungen zur Figur 5, kann eine hinter der Transitvermittlungsstelle 252 liegende Vermittlungsstelle mit den Funktionen gemäß einem Ausführungsbeispiel der Erfindung die Fülldaten X wieder entfernen und die Daten der Subratenverbindung in einer hinsichtlich der benötigten Ubertragungsbandbreite optimalen Form in Nutzkanälen übertragen, die eine Subrate von 64 kbit/s haben.

Ähnlich zu der Kanalstruktur auf den Verbindungsleitungen zwischen den Vermittlungsstellen gibt es auch Telekommunikationsanlagen mit Subkanalstruktur. Die Vereinbarungen der administrativ festgelegten Kanalstruktur müssen von den angeschlossenen Nebenstellen in festgelegter Weise unterstützt werden. Die Signalisierungsprotokolle werden erweitert, wenn der logische Adressiervorrat nicht ausreicht. Beim Teilnehmersignalisierungsprotokoll E-DSS1 (Euro-Digital Signalling System One) können jedoch 120 logische Kanäle adressiert werden. Reicht diese Zahl von Kanälen nicht aus, so sind mehrere Signalisierungskanäle für zueinander disjunkte Mengen von Nutzdatenkanälen vorzusehen.

## Patentansprüche

1. Verfahren zum Vermitteln von Nutzdaten verringerter Bandbreite im Vergleich zu einer Vermittlungsbandbreite,
bei dem in einem Basiskanal einer Vermittlungsbandbreite zu einer Vermittlungseinrichtung (52) die Nutzdaten mindestens zweier Nutzkanäle (K1, K2) übertragen werden,
in der Vermittlungseinrichtung (52) vor der Vermittlung die Nutzdaten nach Nutzkanälen (K1, K2) getrennt werden,
zu den Nutzdaten eines Nutzkanals Fülldaten hinzugefügt werden,
**dadurch gekennzeichnet, dass** die Nutzdaten eines Nutzkanals (K1) gemeinsam mit den Fülldaten (X) in einer Koppeleinrichtung (70) der Vermittlungseinrichtung (52) vermittelt werden, wobei Übertragungskanäle mit einer Vermittlungsbandbreite gekoppelt werden, zu der im Vergleich die Nutzdaten eine verringerte Bandbreite haben,
wobei in der Vermittlungseinrichtung (52) die Fülldaten (X) nach der Vermittlung wieder von den Nutzdaten getrennt werden, und wobei die von den Fülldaten (X) getrennten Nutzdaten zur nächsten Vermittlungseinrichtung (68) übertragen werden.

2. Verfahren nach einem der vorhergehenden Ansprüche, **dadurch gekennzeichnet, daß** auf einer an der Vermittlungseinrichtung (52) ankommenden Übertragungsstrecke (60) und einer von der Vermittlungseinrichtung (52) abgehenden Übertragungsstrecke (66) administrativ Nutzkanäle (K1 bis K8) verringerter Bandbreite im Vergleich zu einer Vermittlungsbandbreite festgelegt werden.

3. Verfahren nach Anspruch 2, **dadurch gekennzeichnet, daß** auf der abgehenden Übertragungsstrecke (60) ein abgehender Nutzkanal aufgrund einer Rufnummer ausgewählt wird.

4. Verfahren nach Anspruch 2, **dadurch gekennzeichnet, daß** eine Steuereinheit (72) der Vermittlungseinrichtung (52) beim Vermitteln einer Verbindung zusätzlich zu der Rufnummer auch eine Bandbreite eines zu der Verbindung gehörenden Nutzkanals berücksichtigt.

5. Verfahren nach Anspruch 4, **dadurch gekennzeichnet, daß** für zu vermittelnde Daten eines auf der ankommenden Übertragungsstrecke (60) ankommenden Nutzkanals (K1) ein auf der abgehenden Übertragungsstrecke (66) abgehender Nutzkanal der gleichen Übertragungsbandbreite gewählt wird.

6. Verfahren nach einem der vorhergehenden Ansprüche, **dadurch gekennzeichnet, daß** geprüft wird, ob ein von der Vermittlungseinrichtung (52) abgehender Nutzkanal der gleichen Bandbreite wie ein an der Vermittlungseinrichtung (52) ankommender Nutzkanal nutzbar ist,
und daß ein von der Vermittlungseinrichtung (52) abgehender Nutzkanal mit größerer Bandbreite als die Bandbreite des ankommenden Nutzkanals (K1) für die weitere Übertragung der Nutzdaten verwendet wird, falls ein von der Vermittlungseinrichtung (52) abgehender Nutzkanal der gleichen Bandbreite wie der ankommende Nutzkanal (K1) nicht verfügbar ist.

7. Verfahren nach Anspruch 6, **dadurch gekennzeichnet, daß** eine Mindestbandbreite für die Übertragung in einem Nutzkanal (K1) bei einem Verbindungsaufbau zu einer folgenden Vermittlungseinrichtung (68) signalisiert wird (226).

8. Verfahren nach einem der vorhergehenden Ansprüche, **dadurch gekennzeichnet, daß** die Vermittlungseinrichtung (52, 68) eine Vermittlungseinrichtung (52, 68) eines Festnetzes (10) ist, dessen Endgeräte (Tln1, Tln2) in ihrer Bandbreite reduzierte Daten im Vergleich zu der Vermittlungsbandbreite erzeugen.

9. Vermittlungseinrichtung (52) zum Vermitteln von Verbindungen verringerter Bandbreite im Vergleich zu einer Vermittlungsbandbreite,
mit einer Anschlußeinheit (54) zum Anschluß von Übertragungsstrecken, auf denen Daten in Basiskanälen mit einer Bandbreite übertragen werden, die einer Vermittlungsbandbreite entspricht,
einer Koppeleinrichtung (70) zum Vermitteln von Übertragungskanälen der Vermittlungsbandbreite,
und mit einer Steuereinheit (72) zum Steuern der Koppeleinrichtung (72) abhängig von einem Verbindungsziel,
wobei in einem Basiskanal die Nutzdaten mindestens zweier Nutzkanäle (K1, K2) übertragen werden,
**dadurch gekennzeichnet, dass** in der Anschlußeinheit (54) die Nutzdaten nach Nutzkanälen getrennt und zusammen mit Fülldaten an die Koppeleinrichtung (70) in einem Übertragungskanal der Vermittlungsbandbreite weitergeleitet werden, wobei die Vermittlungseinrichtung (52) umfasst eine Einheit (174, 176), welche die Fülldaten (X) nach der Vermittlung wieder von den Nutzdaten trennt,
und eine Einheit, die die von den Fülldaten (X) getrennten Nutzdaten zur nächsten Vermittlungseinrichtung (68) sendet.

10. Vermittlungseinrichtung (52) nach Anspruch 9, **dadurch gekennzeichnet, daß** die Steuereinheit (72) bei einem Vermitteln einer Verbindung zusätzlich zu einer Rufnummer auch die Bandbreite eines zur Verbindung gehörenden Nutzkanals (K1 bis K8) berücksichtigt.

11. Vermittlungseinrichtung (52) nach Anspruch 10, **dadurch gekennzeichnet, daß** die Steuereinheit bei dem Vermittlungsvorgang zusätzlich zu der Rufnummer auch eine bei einem Verbindungsaufbau an die Vermittlungseinrichtung signalisierte, für die Übertragung zur Verfügung zustellende Mindestbandbreite der Verbindung berücksichtigt.

12. Vermittlungseinrichtung (52) nach Anspruch 11, **dadurch gekennzeichnet, daß** die Anschlußeinheit (54) mit Hilfe einer Anpassungseinheit (126) die Fülldaten (X) einfügt,
und daß die Fülldaten (X) abhängig von der Bandbreite des beteiligten Übertragungskanals und/oder abhängig von einer signalisierten Mindestbandbreite der Verbindung hinzugefügt werden.

13. Vermittlungseinrichtung (52) nach einem der Ansprüche 9 bis 12, **dadurch gekennzeichnet, daß** die Vermittlungseinrichtung (52) und eine abgesetzte Einheit (250) mit Hilfe einer Verbindungsleitung (254) verbunden sind.

14. Vermittlungseinrichtung (52) nach Anspruch 13, **dadurch gekennzeichnet, dass** die abgesetzte Einheit (250) umfasst eine Anschlußeinheit (298) zum Anschluß mindestens einer Übertragungsstrecke, auf der Daten gemeinsam mit Fülldaten in Basiskanälen mit einer Bandbreite übertragen werden, die der Vermittlungsbandbreite für eine Vermittlung der Daten entspricht,
eine Anpassungseinrichtung (304) zum Entfernen von Fülldaten aus den Basiskanälen und/oder zum Einfügen von Fülldaten in Basiskanäle,
und eine zweite Anschlußeinheit (290) zum Anschluß mindestens einer Übertragungsstrecke, auf der mindestens zwei Nutzkanäle (K1, K2) in einem Basiskanal der Vermittlungsbandbreite übertragen werden,
wobei die zweite Anschlusseinheit (290) mit dem zur abgesetzten Einheit (250) führenden Ende der Verbindungsleitung (254) verbunden ist.

15. Vermittlungseinrichtung (52) nach Anspruch 14, **dadurch gekennzeichnet, daß** die abgesetzte Einheit (250) mit einer dritten Anschlußeinheit (260) zum Anschluß von Übertragungsstrecken an die Vermittlungseinrichtung (52) verbunden ist, daß die Vermittlungseinrichtung (52) mindestens eine vierte Anschlußeinheit (258) zum Anschluß von Übertragungsstrecken an die Vermittlungseinrichtung (52) enthält,
und daß in der Vermittlungseinrichtung (52) durch zweimalige Vermittlung Verbindungen zwischen der dritten Anschlußeinheit (260) und der vierten Anschlußeinheit (258) geschaltet werden,
wobei an die dritte Anschlusseinheit (260) das zu der Vermittlungseinrichtung (52) führende Ende der Verbindungsleitung (254) angeschlossen ist.

## Claims

1. Method for switching useful data of reduced bandwidth in comparison with a switching bandwidth, wherein the useful data of at least two useful channels (K1, K2) are transmitted in a base channel of a switching bandwidth to a switching device (52),
the useful data are separated in accordance with useful channels (K1, K2) in the switching device (52) before the switching, and
padding data are added to the useful data of a useful channel, **characterized in that** the useful data of a useful channel (K1) are switched together with the padding data (X) in a coupling device (70) of the switching device (52), wherein transmission channels of a switching bandwidth are coupled, in comparison with which the useful data have a reduced bandwidth,
wherein the padding data (X) are separated again from the useful data in the switching device (52) after the switching and wherein the useful data separated from the padding data (X) are transmitted to the next switching device (68).

2. Method according to one of the preceding claims, **characterized in that** on a transmission link (60) incoming at the switching device (52) and a transmission link (66) outgoing from the switching device (52) useful channels (K1 to K8) of reduced bandwidth in comparison with a switching bandwidth are established administratively.

3. Method according to Claim 2, **characterized in that** on the outgoing transmission link (60), an outgoing useful channel is selected on the basis of a directory number.

4. Method according to Claim 2, **characterized in that** a control unit (72) of the switching device (52) also takes into consideration a bandwidth of a useful channel belonging to the connection, in addition to the directory number, during the switching of a connection.

5. Method according to Claim 4, **characterized in that** a useful channel outgoing on the outgoing transmission link (66) having the same transmission bandwidth is selected for data to be switched of a useful channel (K1) incoming on the incoming transmission link (60).

6. Method according to one of the preceding claims, **characterized in that** it is checked whether a useful channel outgoing from the switching device (52), the useful channel having the same bandwidth as a useful channel incoming at the switching device (52), is usable,
and **in that** a useful channel outgoing from the switching device (52) having a greater bandwidth than the bandwidth of the incoming useful channel (K1) is used for the further transmission of the useful data, if a useful channel outgoing from the switching device (52) having the same bandwidth as the incoming useful channel (K1) is not available.

7. Method according to Claim 6, **characterized in that** a minimum bandwidth for the transmission in a useful channel (K1) is signalled (226) during a setting-up of a connection to a following switching device (68).

8. Method according to one of the preceding claims, **characterized in that** the switching device (52, 68) is a switching device (52, 68) of a landline network (10), the terminals (Tln1, Tln2) of which generate reduced-bandwidth data in comparison with the switching bandwidth.

9. Switching device (52) for switching reduced-bandwidth connections in comparison with a switching bandwidth, comprising a line unit (54) for the connection of transmission links on which data are transmitted in base channels having a bandwidth which corresponds to a switching bandwidth,
a coupling device (70) for switching transmission channels of the switching bandwidth,
and comprising a control unit (72) for controlling the coupling device (72) in dependence on a connecting destination,
wherein the useful data of at least two useful channels (K1, K2) are transmitted in a base channel,
**characterized in that** the useful data are separated in accordance with useful channels in the line unit (54) and are forwarded, together with padding data, to the coupling device (70) in a transmission channel of the switching bandwidth, wherein the switching device (52) comprises
a unit (174, 176) which separates the padding data (X) again from the useful data after the switching,
and a unit which sends the useful data separated from the padding data (X) to the next switching device (68).

10. Switching device (52) according to Claim 9, **characterized in that** the control unit (72) during a switching of a connection, also takes into consideration the bandwidth of a useful channel (K1 to K8) belonging to the connection, in addition to a directory number.

11. Switching device (52) according to Claim 10, **characterized in that** the control unit, during the switching process, also takes into consideration in addition to the directory number, a minimum bandwidth of the connection, signalled to the switching device and to be provided for the transmission.

12. Switching device (52) according to Claim 11, **characterized in that** the line unit (54) inserts the padding data (X) with the aid of an adapting unit (126),
and **in that** the padding data (X) are added in dependence on the bandwidth of the transmission channel involved and/or in dependence on a signalled minimum bandwidth of the connection.

13. Switching device (52) according to one of Claims 9 to 12, **characterized in that** the switching device (52) and a remote unit (250) are connected with the aid of a connecting line (254).

14. Switching device (52) according to Claim 13, **characterized in that** the remote unit (250) comprises a line unit (298) for connecting at least one transmission link on which data are transmitted together with padding data in base channels having a bandwidth which corresponds to the switching bandwidth for switching the data,
an adapting device (304) for removing padding data from the base channels and/or for inserting padding data into base channels,
and a second line unit (290) for connecting at least one transmission link on which at least two useful channels (K1, K2) are transmitted in a base channel of the switching bandwidth,
wherein the second line unit (290) is connected to the end of the connecting line (254) leading to the remote unit (250).

15. Switching device (52) according to Claim 14, **characterized in that** the remote unit (250) is connected to a third line unit (260) for connecting transmission links to the switching device (52),
**in that** the switching device (52) contains at least one fourth line unit (258) for connecting transmission links to the switching device (52),
and **in that** in the switching device (52), connections are switched between the third line unit (260) and the fourth line unit (258) by double switching,
wherein the end of the connecting line (254) leading to the switching device (52) is connected to the third line unit (260) .

## Revendications

1. Procédé pour commuter des données utiles à largeur de bande réduite en comparaison avec une largeur de bande de commutation, dans lequel :
les données utiles d'au moins deux canaux utiles (K1, K2) sont transmises vers un dispositif de commutation (52) dans un canal de base ayant une largeur de bande de commutation ;
dans le dispositif de commutation (52), avant la commutation, les données utiles sont séparées selon des canaux utiles (K1, K2) ;
des données de remplissage sont ajoutées aux données utiles d'un canal utile ;
**caractérisé en ce que** les données utiles d'un canal utile (K1) sont commutées conjointement avec les données de remplissage (X) dans un dispositif de couplage (70) du dispositif de commutation (52), des canaux de transmission étant couplés avec une largeur de bande de commutation en comparaison avec laquelle les données utiles ont une largeur de bande réduite ;
les données de remplissage (X), dans le dispositif de commutation (52), étant de nouveau séparées des données utiles après la commutation et les données utiles séparées des données de remplissage (X) étant transmises vers le dispositif de commutation suivant (68).

2. Procédé selon l'une des revendications précédentes, **caractérisé en ce que** des canaux utiles (K1 à K8) à largeur de bande réduite en comparaison avec une largeur de bande de commutation sont déterminés administrativement sur un trajet de transmission (60) qui entre dans le dispositif de commutation (52) et un trajet de transmission (66) qui sort du dispositif de commutation (52).

3. Procédé selon la revendication 2, **caractérisé en ce qu'**un canal utile sortant est sélectionné sur le trajet de transmission sortant (60) sur la base d'un numéro d'appel.

4. Procédé selon la revendication 2, **caractérisé en ce qu'**une unité de commande (72) du dispositif de commutation (52), lors de la commutation d'une liaison, tient également compte, en plus du numéro d'appel, d'une largeur de bande d'un canal utile qui fait partie de la liaison.

5. Procédé selon la revendication 4, **caractérisé en ce qu'**est choisi, pour des données à commuter d'un canal utile entrant (K1 sur le trajet de transmission entrant (60), un canal utile sortant à même largeur de bande de transmission sur le trajet de transmission sortant (66).

6. Procédé selon l'une des revendications précédentes, **caractérisé en ce que** :
il est contrôlé si un canal utile sortant du dispositif de commutation (52) et ayant la même largeur de bande qu'un canal utile entrant dans le dispositif de commutation (52) peut être utilisé ; et
un canal utile sortant du dispositif de commutation (52) et ayant une largeur de bande supérieure à la largeur de bande du canal utile entrant (K1) est utilisé pour la suite de la transmission des données si un canal utile sortant du dispositif de commutation (52) et ayant la même largeur de bande que le canal utile entrant (K1) n'est pas disponible.

7. Procédé selon la revendication 6, **caractérisé en ce qu'**une largeur de bande minimale pour la transmission dans un canal utile (K1) est signalée (226) lors d'un établissement de liaison vers un dispositif de commutation suivant (68).

8. Procédé selon l'une des revendications précédentes, **caractérisé en ce que** le dispositif de commutation (52, 68) est un dispositif de commutation (52, 68) d'un réseau fixe (10) dont les terminaux (Tln1, Tln2) produisent des données réduites dans leur largeur de bande en comparaison avec la largeur de bande de commutation.

9. Dispositif de commutation (52) pour commuter des liaisons à largeur de bande réduite en comparaison avec une largeur de bande de commutation, avec :
une unité de connexion (54) pour connecter des trajets de transmission sur lesquels sont transmises des données dans des canaux de base avec une largeur de bande qui correspond à une largeur de bande de commutation,
un dispositif de couplage (70) pour commuter des canaux de transmission ayant la largeur de bande de commutation ; et
une unité de commande (72) pour commander le dispositif de couplage (72) en fonction d'une destination de liaison ;
les données utiles d'au moins deux canaux utiles (K1, K2) étant transmises dans un canal de base ;
**caractérisé en ce que**, dans l'unité de connexion (54), les données utiles sont séparées selon des canaux utiles et retransmises conjointement avec des données de remplissage au dispositif de couplage (70) dans un canal de transmission ayant la largeur de bande de commutation,
le dispositif de commutation (52) comprenant :
une unité (174, 176) qui, après la commutation, sépare de nouveau les données de remplissage (X) des données utiles et une unité qui envoie au dispositif de commutation suivant (68) les données utiles séparées des données de remplissage (X).

10. Dispositif de commutation (52) selon la revendication 9, **caractérisé en ce que** l'unité de commande (72), lors d'une commutation d'une liaison, tient également compte, en plus d'un numéro d'appel, de la largeur de bande d'un canal utile (K1 à K8) qui fait partie de la liaison.

11. Dispositif de commutation (52) selon la revendication 10, **caractérisé en ce que** l'unité de commande, lors de l'opération de commutation, tient également compte, en plus du numéro d'appel, d'une largeur de bande minimale de la liaison signalée au dispositif de commutation lors d'un établissement de liaison et à mettre à disposition pour la transmission.

12. Dispositif de commutation (52) selon la revendication 11, **caractérisé en ce que** l'unité de connexion (54) insère les données de remplissage (X) à l'aide d'une unité d'adaptation (126)
et **en ce que** les données de remplissage (X) sont ajoutées en fonction de la largeur de bande du canal de transmission impliqué et/ou en fonction d'une largeur de bande minimale signalée de la liaison.

13. Dispositif de commutation (52) selon l'une des revendications 9 à 12, **caractérisé en ce que** le dispositif de commutation (52) et une unité distante (250) sont reliés à l'aide d'une ligne de liaison (254).

14. Dispositif de commutation (52) selon la revendication 13, **caractérisé en ce que** l'unité distante (250) comprend :
une unité de connexion (298) pour connecter au moins un trajet de transmission sur lequel sont transmises des données conjointement avec des données de remplissage dans des canaux de base avec une largeur de bande qui correspond à la largeur de bande de commutation pour une commutation des données ;
un dispositif d'adaptation (304) pour retirer des données de remplissage hors des canaux de base et/ou pour insérer des données de remplissage dans des canaux de base ; et
une deuxième unité de connexion (290) pour connecter au moins un trajet de transmission sur lequel sont transmis au moins deux canaux utiles (K1, K2) dans un canal de base ayant la largeur de bande de commutation ;
la deuxième unité de connexion (290) étant reliée à l'extrémité de la ligne de liaison (254) qui mène à l'unité distante (250).

15. Dispositif de commutation (52) selon la revendication 14, **caractérisé en ce que** :
l'unité distante (250) est reliée à une troisième unité de connexion (260) pour connecter des trajets de transmission au dispositif de commutation (52) ;
le dispositif de commutation (52) contient au moins une quatrième unité de connexion (258) pour connecter des trajets de transmission au dispositif de commutation (52) ; et
sont commutées, dans le dispositif de commutation (52), par double commutation, des liaisons entre la troisième unité de connexion (260) et la quatrième unité de connexion (258) ;
l'extrémité de la ligne de liaison (254) qui mène au dispositif de commutation (52) étant connectée à la troisième unité de connexion (260).
